**Europäisches Patentamt**

(19) **European Patent Office**

**Office européen des brevets**

(11) Numéro de publication: **0 118 330**
**B1**

(12) **FASCICULE DE BREVET EUROPÉEN**

(45) Date de publication du fascicule du brevet:
**08.04.87**

(51) Int. Cl.⁴: **C 02 F 11/12,** B 30 B 9/12,
B 01 D 21/24

(21) Numéro de dépôt: **84400180.0**

(22) Date de dépôt: **27.01.84**

(54) Perfectionnement aux épaississeurs de boues à vis.

(30) Priorité: **02.02.83 FR 8301646**

(43) Date de publication de la demande:
**12.09.84 Bulletin 84/37**

(45) Mention de la délivrance du brevet:
**08.04.87 Bulletin 87/15**

(84) Etats contractants désignés:
**AT BE CH DE GB IT LI LU NL SE**

(56) Documents cité:
**DE-C-266 077**
**DE-C-548 411**
**FR-A-1 015 977**

(73) Titulaire: **Société Anonyme d'Etudes de Recherches et de Productions d'Agents Chimiques - E.R.P.A.C., 9, rue Auguste Barbier, F-75011 Paris (FR)**

(72) Inventeur: **Treyssac, Georges, 10, rue Racine, F-59700 Marcq en Baroeul (FR)**
Inventeur: **Morawek, Robert, 59, rue du 11 Novembre, F-59370 Mons en Baroeul (FR)**

(74) Mandataire: **Kedinger, Jean- Paul, c/o Cabinet Malemont 42, avenue du Président Wilson, F-75116 Paris (FR)**

## Description

La présente invention concerne un appareil perfectionné pour l'épaississement d'une suspension de particules solides dans un liquide, telle qu'une boue éventuellement floculée, qui comprend une vis sans fin rotative s'étendant longitudinalement dans une enceinte cylindrique pourvue d'au moins une arrivée de suspension à épaissir, d'une sortie de suspension épaissie située au voisinage de l'extrémité antérieure de la vis et d'au moins une sortie de liquide d'épaississement.

De nombreuses industries, qu'il s'agisse par exemple de l'industrie chimique, de l'industrie du papier ou de l'industrie alimentaire, sont amenées à rejeter des quantités importantes de liquides chargés en matières minérales ou organiques non solubles. Dans le but de recycler ces liquides ou de les rejeter sans polluer l'environnement, il est usuel de les somettre à une clarification préalable, ce traitement étant habituellement réalisé dans des décanteurs ou des flottateurs de conceptions diverses qui conduisent d'une part à un liquide clarifié et d'autre part à une suspension de particules solides se présentant sous la forme de boues pouvant encore contenir jusqu'à 98 % de liquide.

Dans le but du recyclage des particules solides ou encore dans le but de faciliter la manutention et/ou le transport de ces boues, il est souhaitable de réduire très sensiblement la teneur en liquide de ces dernières, ce résultat pouvant être obtenu notamment par mise en oeuvre de l'appareil défini ci-dessus.

Dans les appareils connus de ce type, la vis, de par son mouvement de rotation, provoque le transfert de la suspension de l'extrémité postérieure vers l'extrémité antérieure du cylindre, c'est-à-dire vers la sortie de suspension épaissie au niveau de laquelle elle forme, éventuellement en coopération avec des moyens appropriés, un bouchon qui évite l'éjection par cette sortie, du liquide d'épaississement et freine plus ou moins la sortie de la suspension épaissie qui subit de ce fait un tassement plus ou moins important. Au cours de ce transfert, la suspension est plaquée sur la face de poussée des filets de la vis, ce qui se traduit par une séparation du liquide et donc un épaississement progressif de la suspension, le liquide d'épaississement séparé étant évacué vers la sortie prévue à cet effet. Toutefois, dans ces appareils, la pression exercée par la vis sur la suspension reste sensiblement constante tout le long du processus d'épaississement, c'est-à-dire tout le long de la progression de la suspension de l'extrémité postérieure à l'extrémité antérieure de l'enceinte cylindrique. On comprendra dans ces conditions que si la concentration des boues est relativement aisée dans la partie postérieure de l'enceinte cylindrique où la viscosité desdites boues est faible, cette concentration est de moins en moins facile à obtenir au fur et à mesure que la viscosité des boues augmente, c'est-à-dire au fur et à mesure que ces dernières progressent dans l'enceinte. Il en résulte nécessairement une limitation du degré d'épaississement des boues sortant de l'appareil.

DE-C-266 077 décrit un appareil à vis sans fin pour le transport de boues appareil dans lequel les faces de la vis sans fin sont pourvues d'un revêtement rugueux destiné à favoriser la séparation entre les constituants argileux et les impuretés contenus dans lesdites boues.

Par ailleurs DE-C-548 411 décrit un pressoir à vis sans fin pour l'extraction de l'huile contenue dans une matière imprégnée d'huile, les filets de la vis sans fin étant pourvus de rainures exerçant un effet de frottement et de broyage sur ladite matière imprégnée d'huile, favorisant l'extraction de l'huile.

Dans le but de pallier les inconvénients des appareils connus, la presente invention propose un appareil du type de celui défini au premier paragraphe de cette description et qui se caractérise en ce que tout ou partie des filets de la vis présentent, sur leur face de poussée, un coefficient de frottement supérieur à celui de la face arrière des filets.

Il apparaît en effet, toutes choses étant égales par ailleurs, que la limitation des phénomènes de glissement de la suspension sur ladite face de poussée, conduit à une augmentation de la pression exercée par cette face sur la suspension.

On comprendra ainsi qu'en faisant usage de tels moyens, notamment dans la partie antérieure de l'enceinte cylindrique où circule une suspension a viscosité élevée, l'action de la face de poussée des filets est accrue; il en resulte que la suspension est plaquée plus fortement sur cette face, la quantité de liquide ainsi exprimée de la suspension étant de ce fait plus importante.

Le coefficient de frottement de la face de poussée des filets peut être variable et croissant de l'extrémité postérieure à l'extrémité antériéure de la vis. En effet, dans la zone postérieure de l'enceinte où la suspension est très riche en liquide, ce dernier est assez facilement séparé de la suspension en raison de la faible viscosité de cette dernière. Le coefficient de frottement peut donc être dans cette zone postérieure inférieur au coefficient de frottement dans la zone antérieure de la vis où la suspension présente une viscosité élevée qui, par nature, est difficile à concentrer.

On notera par ailleurs que la variation du coefficient de frottement pourra se faire par paliers successifs.

On remarquera que si seule la face de poussée des filets de la vis présente un coefficient de frottement élevé, on facilite l'évacuation vers la sortie appropriée du liquide qui se sépare de la suspension, en favorisant le glissement de ce liquide sur la face à faible coefficient de frottement, ce qui accentue encore l'épaississement recherché. Ce glissement étant d'autant plus favorisé que le coefficient de frottement sur la face arrière des filets est plus faible, on conférera avantageusement à cette face arrière le coefficient de frottement le plus bas possible.

Il a été indiqué précédemment que pour des questions de viscosité croissante, la concentration de la suspension devient de plus en plus difficile au fur et à mesure qu'elle se rapproche de l'extrémité antérieure de l'enceinte; pour cette raison, il y a tout intérêt à ce que le liquide qui se sépare de la suspension sous l'effet de la pression exercée par la face de poussée des filets puisse être évacué vers la sortie prévue à cette fin de plus en plus facilement au fur et à mesure que l'on se rapproche de ladite extrémité antérieure. Ce résultat peut être obtenu si le coefficient de frottement sur la face arrière des filets est variable et décroissant de l'extrémité postérieure à l'extrémité antérieure de la vis, cette variation se faisant avantageusement par paliers successifs qui correspondent à ceux suivant lesquels varie le coefficient de frottement de la face de poussée des filets de la vis.

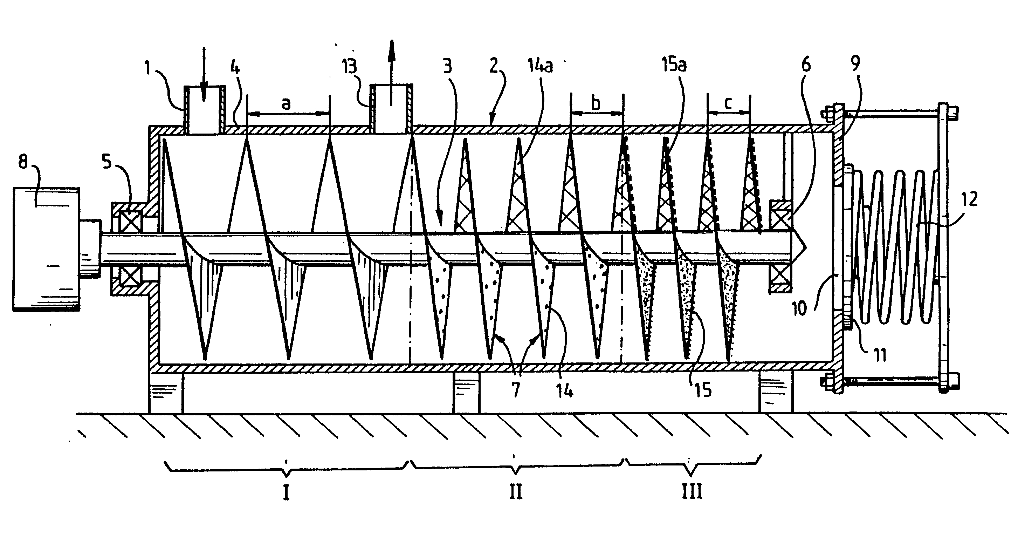

Une forme de réalisation de l'invention est illustrée ci-après à titre d'exemple, en référence au dessin annexe sur lequel la figure unique est une coupe longitudinale schématique d'un épaississeur à vis sans fin, à pas variable par paliers successifs.

La suspension à épaissir, après un traitement préalable éventuel de floculation par mise en oeuvre de techniques connues, est amenée par une tubulure 1 dans la partie amont d'une enceinte cylindrique horizontale 2 dans laquelle s'étend longitudinalement une vis sans fin 3, la tubulure 1 débouchant dans l'enceinte 2 par la paroi cylindrique 4 de cette dernière. La vis 3 est montée a rotation dans l'enceinte 2 au moyen de deux paliers 5, 6 avec un jeu minimum entre le sommet des filets 7 de la vis et l'enceinte 2. Par ailleurs, cette vis 3 est amenée en rotation par un moteur 8 comportant des moyens appropriés permettant d'ajuster la vitesse de rotation de la vis 3 à la valeur, aisément déterminable par des essais, permettant d'obtenir l'épaississement recherché dans les meilleures conditions. La vis 3 est à pas variable (a > b > c), ce pas décroissant par paliers successifs I, II, III de l'extrémité amont à l'extrémité aval de l'enceinte, en considérant le sens de progression de la suspension. Il est à noter également que le dernier filet de l'extrémité antérieure de la vis 3 est situé à une distance telle de la face latérale aval 9 de l'enceinte 2, pour qu'il puisse se former entre ce dernier filet et la face 9 un bouchon de suspension épaissie.

La face latérale 9 est pour sa part munie d'une ouverture 10 pour l'évacuation de la suspension épaissie, qui coopère avec un obturateur 11 pressé par un ressort 12 ou tout autre moyen équivalent sur les bords de l'ouverture 10. Quant à la paroi cylindrique 4, elle porte, outre la tubulure 1, une tubulure 13 de sortie de liquide d'épaississement, disposée en aval de ladite tubulure 1.

La suspension à épaissir pénétrant dans l'enceinte par la tubulure 1 est transférée par la vis sans fin 3 vers l'extrémité aval de l'enceinte, c'est-à-dire vers l'ouverture 10. Au cours de ce transfert, la suspension est plaquée sur la face de poussée des filets de la vis, cette face exerçant ainsi une pression sur ladite suspension, cette pression ayant pour effet d'exprimer le liquide de la suspension.

Sur la face de poussée de chaque filet 7, il se forme donc un dépôt de suspension de moins en moins riche en liquide au fur et à mesure que l'on s'éloigne de la tubulure 1, le liquide expulsé de la suspension (liquide d'épaississement) venant prendre place entre ce dépôt et la face arrière du filet suivant avant de s'éloigner vers la tubulure 13 qui, pour assurer une bonne évacuation dudit liquide expulsé, est de préférence disposée entre deux filets successifs de la vis 3 et à proximité de la face arrière du filet aval. On assiste donc à un épaississement progressif de la suspension et, partant, à une augmentation de la viscosité de cette dernière, qui tend à rendre de plus en plus difficile l'expulsion du liquide hors de la suspension. Toutefois, cette difficulté est vaincue par la mise en oeuvre d'une vis sans fin 3 dont tout ou partie des filets présentent sur leur face de poussée, un coefficient de frottement élevé, comme cela est expliqué ci-après.

On notera ici qu'entre la tubulure 13 et la face latérale aval 9 de l'enceinte, la suspension de moins en moins riche en liquide évoquée ci-dessus et le liquide d'épaississement circulent à contre-courant, respectivement le long de la face de poussée des filets et le long de la face arrière des filets, alors qu' entre la tubulure 1 et la tubulure 13, cette circulation se fait dans le même sens.

La suspension épaissie arrivant au niveau de l'ouverture 10 se heurte à l'obturateur 11 fermé sous l'effet de la tension du ressort 12 et qui s'oppose donc à l'évacuation de ladite suspension. Il en résulte la formation progressive d'un bouchon de suspension épaissie. De par l'existence de ce bouchon, il s' établit au niveau de l'extrémité aval de l'enceinte 2 une pression de tassement de la suspension, croissante en raison de l'apport progressif de suspension épaissie, pression qui favorise l'épaississement de la suspension et l'évacuation, par la tubulure 13, du liquide séparé au cours de cet épaississement. Lorsque cette pression devient supérieure à la tension du ressort 12, l'obturateur 11 s'ouvre pour libérer une certaine quantité de la suspension épaissie formant le bouchon et se referme dès que ladite pression redevient inférieure à la tension du ressort. Par ailleurs, la présence dudit bouchon empêche l'evacuation du liquide d'épaississement par l'ouverture 10; de ce fait, au fur et à mesure de sa séparation de la suspension, ce liquide d'épaississement s'achemine vers la tubulure 13. Il est à noter toutefois que l'effet de tassement évoqué ci-dessus peut être obtenu, bien qu'à un degré moindre, en l'absence de l'obturateur 11 et du ressort 12. En effet, il y a également dans ce cas formation d'un bouchon de suspension épaissie entre le dernier filet antérieur de la vis et l'ouverture 10, ce bouchon freinant la sortie de la suspension épaissie par ladite ouverture 10 et assurant par là même le tassement recherché.

Conformément à l'invention on peut mettre en oeuvre une vis sans fin dont tout ou partie des filets présentent au moins sur leur face de poussée, un coefficient de frottement elevé. Il est cependant encore plus avantageux d'utiliser une vis dont les filets présentent une face de poussée ayant un coefficient de frottement superieur à celui de la face arrière de ces mêmes filets. C'est ce qui apparaît sur la figure unique du dessin annexé où les filets des paliers II et III présentent uniquement sur leur face de poussée, respectivement un revêtement 14 et un revêtement 15 qui permettent d'augmenter le coefficient de frottement sur cette face. Selon une caractéristique de l'invention, le revêtement 15 possède avantageusement un coefficient de frottement supérieur à celui du revêtement 14. Les revêtements en cause pourront aisément être choisis en fonction de la nature des particules solides et du coefficient de frottement recherché et ils pourront par exemple être constitués par une couche de peinture au néoprène ou par une fine couche de caoutchouc. On notera toutefois qu'une autre manière d'augmenter le coefficient de frottement desdites faces de poussée consisterait à soumettre les filets à un traitement physique tel qu'un sablage pour modifier l'état de surface de leur face de poussée, ce traitement étant bien entendu réalisé pour conférer à la face de poussée des filets du palier III un coefficient de frottement supérieur à celui conféré à la face de poussée des filets du palier II.

Bien entendu, on pourra encore augmenter l'effet recherché en soumettant la face arrière des filets en cause à un traitement permettant d'y abaisser le coefficient de frottement. Ainsi et selon une autre caractéristique de l'invention, on dépose sur la face arrière des filets correspondant aux paliers II et III respectivement un revêtement 14a et un revêtement 15a, permettant d'abaisser le coefficient de frottement sur cette face arrière, le revêtement 15a possédant avantageusement un coefficient de frottement inférieur à celui du revêtement 14a. Ici encore, les revêtements en cause pourront être aisément déterminés en fonction du coefficient de frottement recherché et seront d'une manière générale constitués par toute matière apte à former un revêtement à surface lisse tel que le verre ou certains vernis par exemple. Par ailleurs et comme précédemment, une autre manière d'abaisser le coefficient de frottement de la face arrière des filets consisterait à modifier l'état de surface de cette face (polissage par exemple).

Dans la zone de l'enceinte 2 correspondant aux paliers II et III, se poursuit le processus d'épaississement qui s' était engagé au niveau du palier I, ce processus se trouvant toutefois accentué par l'augmentation du coefficient de frottement de la face de poussée des filets desdits paliers II et III. En effet, au niveau du palier II, la pression exercée sur la suspension par la face de poussée des filets correspondant à ce palier est accrue, ce qui rend plus aisée l'opération d'épaississement, cet accroissement de pression étant encore plus marqué au niveau du palier III; le liquide d'épaississement séparé est par ailleurs plus facilement évacué vers la tubulure 13, en raison des faces arrières lisses sur lesquelles peut aisément glisser ce liquide.

Il est bien entendu possible d'apporter à l'épaississeur qui vient d'être décrit diverses modifications sans pour autant sortir du cadre de la présente invention.

Ainsi, il est possible de prévoir plusieurs tubulures 13 réparties sur la paroi cylindrique 4; la tubulure 13 pourrait être remplacée par une ouverture aménagée dans la paroi cylindrique 4 et s'étendant sur une longueur plus ou moins importante de l'enceinte 2; la paroi cylindrique 4 pourrait être constituée sur une partie au moins de sa longueur, par une grille filtrante par laquelle est évacué le liquide d'épaississement, cette grille jouant le même rôle que la tubulure 13 et pouvant de ce fait être substituée à cette dernière; le pas de la vis 3 au lieu d'être décroissant par paliers successifs, pourrait décroître de manière continue de l'extrémité amont à l'extrémité aval de l'enceinte 2; les filets correspondant au palier I pourraient eux également comporter, sur leur face de poussée, un revêtement de nature à augmenter le coefficient de frottement et, sur leur face arrière, un revêtement de nature à abaisser le coefficient de frottement, de manière à ce que sur ladite face de poussée le coefficient de frottement croisse de l'extrémité postérieure à l'extrémité antérieure de la vis et que sur ladite face arrière le coefficient de frottement décroisse de l'extrémité postérieure à l'extrémité antérieure de la vis; enfin au lieu de faire varier les coefficients de frottement par paliers successifs, on pourra les faire varier de manière continue.

## Revendications

1. Appareil pour l'épaississement d'une suspension de particules solides dans un liquide, telle qu'une boue éventuellement floculée, qui comprend une vis sans fin (3) rotative s'étendant longitudinalement dans une enceinte cylindrique (2) pourvue d'au moins une arrivée (1) de suspension à épaissir, d'une sortie (10) de suspension épaissie située au voisinage de l'extrémité antérieure de la vis et d'au moins une sortie (13) de liquide d'épaississement, caractérisé en ce que tout ou partie des filets (7) de la vis présentent sur leur face de poussée, un coefficient de frottement supérieur à celui de la face arrière des filets (7).

2. Appareil selon la revendication 1, caractérisé en ce que ledit coefficient de frottement de la face de poussée des filets (7) est variable et croissant de l'extrémité postérieure à l'extrémité antérieure de la vis.

3. Appareil selon la revendication 2, caractérisé en ce que ledit coefficient de frottement de la face du poussée des filets (7) varie par paliers successifs.

4. Appareil selon la revendication 1, 2 ou 3 caractérisé en ce que le coefficient de frottement de la face arrière des filets est variable et décroissant de l'extrémité postérieure à l'extrémité antérieure de la vis.

5. Appareil selon la revendication 4, caractérisé en ce que ledit coefficient de frottement de la face arrière des filets varie par paliers successifs, ces derniers correspondant à ceux suivant lesquels varie le coefficient de frottement de la face de poussée des filets (7).

## Patentansprüche

1. Schneckenverdichter für Schlamm, bestehend aus einer umlaufenden Schnecke (3), die sich in Längsrichtung in einem zylindrischen Behälter (2) erstreckt, der mit mindestens einem Zulauf (1) für den Schlamm, einem Auslauf (10) für den Schlamm in der Nähe des vorderen Endes der Schnecke und mit mindestens einem Auslauf (13) der Verdickungsflüssigkeit versehen ist, dadurch gekennzeichnet, daß alle oder ein Teil der Schneckengewinde (7) auf ihrer Schubseite einen Reibungskoeffizienten aufweisen, der größer ist als derjenige auf der Rückseite dieser Schneckengewinde (7).

2. Schneckenverdichter nach Anspruch 1, dadurch gekennzeichnet, daß der genannte Reibungskoeffizient der Schubseite der Schneckengewinde (7) veränderlich ist und vom hinteren bis zum vorderen Ende der Schnecke (3) zunimmt.

3. Schneckenverdichter nach Anspruch 2, dadurch gekennzeichnet, daß der Reibungskoeffizient der Schubseite der Gewinde (7) in aufeinanderfolgenden Stufen zunimmt.

4. Schneckenverdichter nach Anspruch 1, 2 oder 3, dadurch gekennzeichnet, daß der Reibungskoeffizient der Rückseite der Gewinde veränderlich ist und vom hinteren Ende bis zum vorderen Ende der Schnecke abnimmt.

5. Schneckenverdichter nach Anspruch 4, dadurch gekennzeichnet, daß der Reibungskoeffizient der Rückseite der Gewinde in aufeinanderfolgenden Stufen veränderlich ist, wobei die Stufen denjenigen entsprechen, gemäß denen sich der Reibungskoeffizient der Schubseite der Gewinde (7) ändert.

## Claims

1. An apparatus for thickening a suspension of solid particles in a liquid such as a possibly flocculated sludge, comprising a rotary endless screw (3) extending longitudinally in a cylindrical enclosure (2), said enclosure having at least one inlet (1) for suspension to be thickened, an outlet (10) for thickened suspension near the front end of said screw and at least one outlet (13) for liquid separated during the thickening, characterized in that the thrust face of all or part of the threads (7) of the screw has a coefficient of friction higher than that of the rear face of the threads (7).

2. Apparatus according to claim 1, characterized in that said coefficient of friction of the thrust face of the threads (7) varies and increases from the rear end to the front end of said screw.

3. Apparatus according to claim 2, characterized in that said coefficient of friction of the thrust face of the threads (7) varies in successive stages.

4. Apparatus according to claim 1, 2 or 3, characterized in that the coefficient of friction of the rear face of the threads (7) varies and decreases from the rear end to the front end of said screw.

5. Apparatus according to claim 4, characterized in that said coefficient of friction of the rear face of the threads varies in succesive stages corresponding to the variation of the coefficient of friction of the thrust face of the threads (7).

0 118 330